(19) Europäisches Patentamt
European Patent Office
Office européen des brevets

(11) Veröffentlichungsnummer: **0 165 648**
**B1**

# (12) EUROPÄISCHE PATENTSCHRIFT

(45) Veröffentlichungstag der Patentschrift: **29.11.89**

(51) Int. Cl.⁴: **C 09 D 5/44**

(21) Anmeldenummer: **85201029.7**

(22) Anmeldetag: **13.06.85**

(54) **Hitzehärtbares Überzugsmittel und seine Verwendung.**

(30) Priorität: **16.06.84 DE 3422474**

(43) Veröffentlichungstag der Anmeldung:
**27.12.85 Patentblatt 85/52**

(45) Bekanntmachung des Hinweises auf die Patenterteilung:
**29.11.89 Patentblatt 89/48**

(84) Benannte Vertragsstaaten:
**AT BE CH DE FR GB IT LI NL SE**

(56) Entgegenhaltungen:
**WO-A-83/00872**
**AT-A-378 537**
**DE-B-1 294 669**
**GB-A-2 050 381**
**US-A-3 896 017**
**US-A-4 157 324**

(73) Patentinhaber: **BASF Aktiengesellschaft,**
**Carl-Bosch-Strasse 38, D-6700 Ludwigshafen (DE)**

(72) Erfinder: **Kempter, Fritz Erdmann, Dr., L 2, 14,,**
**D-6800 Mannheim 1 (DE)**
Erfinder: **Nieberle, Juergen, Dr., Am Huettenwingert 19,**
**D-6706 Wachenheim (DE)**
Erfinder: **Schupp, Eberhard, Dr., Tilsiter Weg 4,**
**D-6830 Schwetzingen (DE)**

**EP 0 165 648 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft hitzehärtbare Überzugsmittel und deren Verwendung zum Überziehen von Substraten, insbesondere von elektrisch leitenden Substraten durch kathodische Elektrotauchlackierung.

In der DE-OS 2 737 375 werden Umsetzungsprodukte aus Polyepoxidharzen mit Polyaminen beschrieben, die pro Mol des Adduktes mit mindestens 2 Molen eines Monoepoxides oder einer Monocarbonsäure (Kettenlänge $C_8$-$C_{24}$) umgesetzt werden, wobei Monoepoxide bevorzugt sind. Als Vernetzungsmittel dienen Amino- und Phenolharze. Als Einbrennbedingungen werden hier 30 Minuten bei 190 °C angegeben.

Auch in der DE-OS 2 426 996 sind kathodische Abscheidungsbäder beschrieben, die aus Umsetzungsprodukten eines Diepoxidharzes mit poly- und mono-funktionellen Aminen hergestellt sind, wobei die polyfunktionellen Amine als Kupplungsmittel und die monofunktionellen Amine als Abbruchmittel wirken. Als Vernetzungsmittel dienen ebenfalls Phenolharze.

Aus der DE-OS 3 014 290 sind Epoxidharz/Amin-Addukte bekannt, die mit Monoacrylaten copolymerisiert werden. Acrylsäure ist als Comonomeres erwähnt. Die Produkte werden unter anderem mit Phenolharz präkondensiert.

In der DE-OS 2 936 411 werden selbstvernetzende hitzehärtbare wässrige Überzugsmittel beschrieben, die primäre und/oder sekundäre und gegebenenfalls auch tertiäre Aminogruppen, sowie endständige veresterte Carboxylgruppen enthaltende Kunstharze enthalten. In einigen Beispielen wird die Mitverwendung handelsüblicher Phenolharze angeführt.

Aus der DE-OS 2 805 936 sind Carboxylgruppen enthaltende kationische Bindemittel bzw. Bindemittelkombinationen bekannt. Als Vernetzer dienen Amino- und Phenolharze, die für den Fall, dass sie nicht wasserlöslich sind, mit dem Bindemittel präkondensiert worden sind.

Aus der WO-A 300 872 sind Bindemittel bekannt, die aus Epoxidharzen durch Umsetzung mit Aminen, weiterer Umsetzung mit Phenol und anschliessender Methylolierung mit Formaldehyd hergestellt wurden. Die hierbei verwendeten Epoxidharze sind teilweise entfunktionalisiert und enthalten durchschnittlich 0,5 bis 1,3 Epoxidgruppen pro Molekül.

Die Verwendung von Phenolharzen zur Härtung kathodisch abscheidbarer Elektrotauchlackbindemittel war also bereits bekannt. Die üblichen, vorzugsweise veretherten Phenolharze werden durch Methylolierung im alkalischen pH-Bereich erhalten. Von Phenol ausgehend, wird dabei die p-Position bevorzugt umgesetzt und zum Aufbau des oligomeren oder polymeren Harzes verbraucht. Die reaktive p-Position steht also bei üblichen Phenolharzen nur untergeordnet oder gar nicht, beim Einsatz bereits vorkondensierter Phenole, wie Bisphenol A, überhaupt nicht mehr zur Verfügung. Die Methylolierung im sauren pH-Bereich verläuft bei üblichen Temperaturen und drucklos nur mit geringer Ausbeute. Bei hohen Temperaturen werden Novolake erhalten.

Aufgabe der vorliegenden Erfindung ist es nun, Überzugsmittel aufzuzeigen, die niedrigere als derzeit übliche Härtungstemperature erfordern und sich bevorzugt im Temperaturbereich von 130 °C–170 °C besonders bevorzugt 140 °C–160 °C aushärten lassen.

Eine weitere Aufgabe ist es, die beim Aushärten aus dem Bindemittel abspaltbaren Anteile möglichst niedrig zu halten.

Ferner sollen die Lager- und Badstabilitätseigenschaften der Überzugsmittel den praktischen Erfordernissen entsprechen.

Gegenstand der vorliegenden Erfindung sind hitzehärtbare wässrige Überzugsmittel, die dadurch gekennzeichnet sind, dass sie als Bindemittel ein Gemisch oder Vorkondensat aus

(A) 55 bis 95 Gew.% eines stickstoffbasischen Harzes mit einem mittleren Molekulargewicht $\bar{M}_n$ zwischen 500 und 10000 und einer NH-Aminzahl von 20 bis 150 mg KOH/g, erhältlich durch Umsetzung eines Polyepoxides mit einer 1,2-Epoxidäquivalenz von etwa 2 oder mehr mit einem Amin, das mindestens eine primäre oder sekundäre Aminogruppe enthält und

(B) 5 bis 45 Gew.% eines Phenolharzes mit einem mittleren Molekulargewicht $\bar{M}_n$ von 250 bis 2500 und auf der Basis eines über o,o′-Methylenether-Gruppen verknüpften Resolethers, dessen p-Positionen überwiegend Wasserstoff und/oder Methylolalkylethergruppen tragen, enthalten.

Die Komponente (A) weist dabei vorzugsweise eine NH-Aminzahl von 20–150 mg KOH/g auf, und die Phenol-Phenol-Bindungen der Komponente (B) bestehen vorzugsweise zu 15–90% aus Methylenetherbrücken und zu 10–85% aus Methylenbrücken mit einer Orientierung von 70–90% in o-Position und 10–30% in p-Position.

Als Komponente (B) bevorzugt ist ferner ein Reaktionsprodukt aus Phenol und Formaldehyd und gegebenenfalls einem aliphatischen Alkohol, das bei pH 4,0–7,0 in Anwesenheit von zweiwertigen Metallionen hergestellt worden ist.

Das erfindungsgemässe Bindemittel besteht vorzugsweise aus einem Gemisch oder Vorkondensat aus 55–95 Gew.-% der Komponente (B).

Gegenstand der vorliegenden Erfindung ist ausserdem die Verwendung der erfindungsgemässen Überzugsmittel in protonierter Form für die kathodische Elektrotauchlackierung von Metallteilen.

Überraschenderweise lassen sich die oben angeführten Ziele in sehr vorteilhafter Weise durch die erfindungsgemässen Überzugsmittel erreichen.

Die erfindungsgemässen Überzugsmittel zeichnen sich gegenüber den Überzugsmitteln des oben angeführten vorbekannten Standes der Technik insbesondere dadurch aus, dass sie bei niedrigeren als den üblichen Härtungstemperaturen, nämlich bei 130–160 °C eingebrannt werden können und die Beschichtungen auch als sehr

dünne Schichten ausgezeichnete korrosionsschützende Eigenschaften, sowie gute Umgriffseigenschaften aufweisen.

Zu den Aufbaukomponenten der erfindungsgemässen Überzugs- bzw. Bindemittel ist im einzelnen folgendes auszuführen.

(A) Als stickstoffbasische Harze (A) eignen sich im allgemeinen stickstoffbasische Polyadditions-, Polykondensations- oder Polymerisationsprodukte mit mittleren Molekulargewichten $M_n$ zwischen 500 und 10000, die aus einer grossen Anzahl von Hydroxylgruppen enthaltenden Polymeren ausgewählt werden können, wie zum Beispiel Polyesterharze, Polyacrylate und Polymere, die sich von Epoxidharzen ableiten, insbesondere solche, die mindestens einen Teil oder die Gesamtheit der stickstoffbasischen Gruppen als NH-Gruppen, d.h. primäre oder sekundäre Aminogruppen enthalten. Bevorzugt sind Produkte mit NH-Aminzahlen von 20–150 mg KOH/g; besonders bevorzugt sind Produkte mit einem hohen Anteil sekundärer Amino-β-hydroxyalkyl-Gruppierungen und NH-Aminzahlen von 30–130 mg KOH/g.

Als Komponente (A) geeignete Epoxidharz/Amin-Addukte kommen NH-Gruppen tragende Produkte in Frage, wobei die NH-Gruppe eine primäre oder sekundäre Aminogruppe sein kann.

Derartige Produkte mit primären Aminogruppen sind z.B. in der US-PS 3 947 339 beschrieben. Sie werden erhalten durch Umsetzung des Epoxidharzes mit Polyaminen, bei denen die primären Aminogruppen durch Ketimingruppen blokkiert sind. Beim Einsatz derartiger Produkte muss, sollen die Komponenten (A) und (B) miteinander zu Vorkondensaten umgesetzt werden, vor der Reaktion im allgemeinen die Ketimingruppe, mindestens partiell, hydrolytisch gespalten werden.

Produkte, die neben primären Aminogruppen noch sekundäre Aminogruppen aufweisen, die in β-Stellung eine sekundäre OH-Gruppe tragen, sind die Umsetzungsprodukte von Epoxidharzen mit Polyaminen bzw. Diaminen, wie sie in den DE-OS 2 737 375, DE-PS 2 845 988 und DE-OS 2 914 297 sowie DE-OS 3 008 810, DE-OS 2 805 936 und der deutschen Patentanmeldung P 3 422 473.4 (O.Z. 0050/37172) beschrieben sind. Ähnlich aufgebaute Produkte werden durch die Umsetzung mit primären Aminen erhalten.

Produkte, die primäre und sekundäre Aminogruppen besitzen, die in β-Stellung eine sekundäre OH-Gruppe tragen, sind z.B. die Umsetzungsprodukte von Epoxidharzen mit Ammoniak. Solche Epoxidharz-Amin-Addukte sind in der DE-OS 2 914 297 beschrieben.

Geeignete Reaktionen zur Modifizierung der Epoxid-Amin-Addukte sind z.B. die amidbildende Umsetzung mit Mono- und Dicarbonsäure.

Epoxidharze für den Aufbau der erfindungsgemäss einzusetzenden stickstoffbasischen Harze (A) sind z.B. Polyepoxide, die eine 1,2-Epoxidäquivalenz von grösser als 1, bevorzugt etwa 2 oder mehr, haben. Besonders bevorzugt sind Polyepoxide, die hinsichtlich der Epoxidgruppierung difunktionell sind. Besonders bevorzugt sind Di- und Polyglycidylether von Polyphenolen, wie Bisphenol A. Weitere Beispiele von derartigen bekannten Polyepoxiden sind z.B. der US-PS 4 260 716, Spalte 3, Zeile 20 bis Spalte 4, Zeile 30 zu entnehmen.

Zur Herstellung der stickstoffbasischen Harze (A) können auch andere epoxidhaltige Polymere verwendet werden, zum Beispiel Acrylpolymere, die Epoxidgruppen enthalten. Man kann diese Polymeren z.B. dadurch erhalten, dass man ein ungesättigtes epoxyhaltiges Monomeres, wie Glycidylacrylat oder -methacrylat, mit einem oder mehreren anderen polymerisierbaren ethylenisch ungesättigten Monomeren copolymerisiert. Beispiele solcher Polymeren sind in der US-PS 4 001 156, Spalte 3, Zeile 59 bis Spalte 5, Zeile 60 beschrieben.

Die Reaktionsprodukte des Polyepoxids und des Amins können mindestens teilweise mit einer Säure neutralisiert sein, wobei ein polymeres Produkt entsteht, das Aminsalz- und/oder quaternäre Ammoniumsalzgruppen enthält. Die Reaktionsbedingungen für die Umsetzung der Polyepoxide mit Aminen, Beispiele von verschiedenen Aminen und ihre mindestens partielle Neutralisation mit Säure, sind näher in der US-PS 4 260 720, Spalte 5, Zeile 20 bis Spalte 7, Zeile 4, beschrieben.

Auch der Europäischen Patentanmeldung 0 012 463 sind verschiedene geeignete Polyepoxid-Aminaddukte zu entnehmen.

Bei der Umsetzung des Amins mit dem Polyepoxid hängt die relative Menge dieser beiden Komponenten von dem Umfang ab, in dem die Bildung von kationischen Salzgruppen erwünscht ist, was wiederum von dem Molekulargewicht des Polymeren abhängt. Der Umfang der Bildung von kationischen Salzgruppen und das Molekulargewicht des Reaktionsproduktes, gegebenenfalls auch der Grad der Umsetzung der Komponenten (A) und (B) sollten so gewählt werden, dass die Mischung des Überzugsmittels im wässrigen Medium eine stabile Dispersion ergibt.

Unter einer beständigen Dispersion wird dabei eine Dispersion verstanden, bei der sich die dispergierte Phase nicht absetzt oder, falls eine gewisse Sedimentierung eintritt, diese leicht wieder redispergierbar ist. Ausserdem sollte die Dispersion bei der Verwendung für die Elektrotauchlakkierung einen ausreichenden kationischen Charakter haben, so dass ausreichend hohe pH- und Leit-Werte des Bades erreicht werden können.

Es ist zweckmässig, das Molekulargewicht, die Struktur und den Grad der Bildung von kathodischen Salzgruppen so zu steuern, dass das dispergierte Überzugsmittel die gewünschten Fliesseigenschaften zur Bildung eines Films auf dem Substrat hat. Im Falle der kathodischen Elektrotauchlackierung handelt es sich dabei um die Filmbildung auf der Kathode. Der Film sollte gegen Feuchtigkeit in dem Ausmass unempfindlich sein, dass er sich in dem Elektrotauchbad nicht

wieder auflöst und dass er nach der Entfernung aus dem Bad beim Spülen der beschichteten Oberfläche nicht abgelöst wird.

Im allgemeinen haben die meisten kationischen Polymeren in den erfindungsgemässen Überzugsmassen mittlere Molekulargewichte im Bereich von etwa 500 bis 10000 und enthalten 0,2 bis 6, bevorzugt 0,5 bis 3,5, besonders bevorzugt 1,0 bis 2,5 Milliäquivalente an kationischen Gruppen pro Gramm Harzfeststoff. Selbstverständlich kann man das Molekulargewicht und die kationischen Gruppen in einer solchen Weise miteinander kombinieren, dass ein Polymeres mit den gewünschten Eigenschaften entsteht.

Ausser Epoxidharzen und von Epoxidharzen sich ableitenden Harzen kommen andere hydroxylhaltige Polymere in Betracht, wie z.B. Polyesterharze oder hydroxylhaltige Acrylpolymere. Beispiele solcher Polymeren und ihrer kationischen elektrisch abscheidbaren Derivate sind beschrieben in den GB-PS 1 303 480 (hydroxylhaltige Acrylpolymere und Polyester) und 1 159 390 (hydroxylhaltige Acrylpolymere).

(B) In dem erfindungsgemässen Überzugsmittel ist das Härtungs- oder Vernetzungsmittel (B) ein Phenolharz auf der Basis eines Resolethers, der mindestens zwei Phenolreste aufweist, die in o,o'-Position durch mindestens eine Methylenethergruppe verknüpft sind.

Derartige Produkte sind beispielsweise in den US-PS 1 302 801, 3 485 797 und 4 120 847 beschrieben. Neben dieser Gruppierung können noch Methylol und/oder Methylolalkylether-Gruppen anwesend sein. Insbesondere bei Produkten mit niedrigem Gehalt an Methylenether-Gruppen gewährleisten gegebenenfalls in p-Position eingebaute Methylolalkylethergruppen eine gute Vernetzung bei Temperaturen $<160\,°C$.

Ausser der Methylenethergruppierung enthalten Produkte der Komponente (B) mit höheren Molekulargewichten in Abhängigkeit vom Molekulargewicht Methylenbrücken, die o,o'- oder o,p-orientiert vorhanden sind. Das Molekulargewicht der Vernetzerkomponente (B) liegt im allgemeinen zwischen 250 und 2500; bevorzugt ist ein Bereich zwischen 500 und 1200, entsprechend dem Kondensationsgrad von im Mittel 4–9, wobei Produkte mit niedrigem Kondensationsgrad vorzugsweise dann eingesetzt werden, wenn eine Vorkondensation mit der Komponente (A) durchgeführt wird.

Die Komponente (B) kann in etwa durch die folgende Formel schematisch charakterisiert werden:

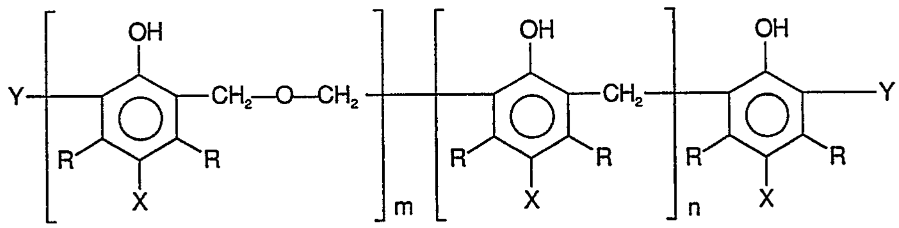

worin X für H, eine Methylolalkylethergruppe mit 1 bis 12 Kohlenstoffatomen in der Alkylgruppe, wobei diese Alkylgruppen bis zu 2 OH-Gruppen sowie gegebenenfalls einen Phenyl- oder Benzylrest enthalten können, und die höheren Alkylgruppen bis zu 4 Ethersauerstoffatome enthalten können, oder eine Methylenbrücke zu einem anderen Phenolkern,

Y für H, einen $CH_2OH$- oder einen Methylolalkyletherrest der unter X angegebener Art stehen können,

R für H, eine Alkylgruppe mit 1 bis 15 Kohlenstoffatomen, wobei die höheren Alkylreste bis zu 2 C-C-Doppelbindungen enthalten können,

m für eine ganze Zahl von 1 bis 9 und

n für O oder eine ganze Zahl von 1 bis 10 stehen kann.

Komponente (B) weist überwiegend o,o'-verknüpfte Phenolkerne auf, die gegebenenfalls in p-Position Methylolalkylether-Gruppen tragen, wobei für dessen Herstellung ein in o-Position dirigierender Katalysator, meistens ein zweiwertiges Metallkation eingesetzt wird.

Dieses primäre Kondensationsprodukt enthält o,o'-verknüpfte Methylenethergruppen, die eine hohe Reaktivität besitzen.

Zur Herstellung der Komponente (B) können Phenol und Formaldehyd (Molverhältnis etwa 1:3) in einem wässrigen oder nicht wässrigen (z.B. in Benzol) System in Anwesenheit eines die Reaktion in o-Position dirigierenden Katalysators bei pH 4,0–7,0 und 80–110 °C umgesetzt werden. Als Katalysatoren kommen Hydroxide, Oxyde und Salze organischer Säuren 2-wertiger Metalle in Frage, wie z.B. $Zn^{++}$; $Sn^{++}$; $Pb^{++}$; $Mg^{++}$; $Ca^{++}$; $Ba^{++}$; $Co^{++}$ in einer Menge von 0,001–12%, bevorzugt 0,01–8,0%, bezogen auf eingesetztes Phenol in Form ihrer Acetate, Naphthenate, Neodecanoate, Benzoate usw., wobei der untere Bereich vorzugsweise für die Reaktion in aprotischen Lösungsmitteln herangezogen wird. Die gegebenenfalls sich anschliessende Veretherung noch vorhandener Methylolgruppen wird mit primären und sekundären Alkoholen durchgeführt. Im einzelnen kommen dafür Monoalkohole mit 1–15 C-Atomen und mehrwertige Alkohole wie z.B. Glycerin, Trimethylolpropan, Hexandiol, Diethylenglykol und Triethylenglykol, gegebenenfalls im Gemisch mit den erstgenannten, in Betracht.

Für den Fall, dass mehr als 2 bis 2,2 Mole Formaldehyd auf 1 Mol Phenol eingesetzt werden sollen, erfolgt die Zugabe des Formaldehyds bzw. der Formaldehyd-liefernden Verbindungen mindestens 2-stufig, d.h. nochmals während der

Veretherung. Produkte, die Methylolalkylethergruppen aufweisen, sind bevorzugt einsetzbar.

Die Komponente (B) kann alternativ auch hergestellt werden, indem alle Reaktionskomponenten, die Alkoholkomponente eingeschlossen, in einer simultanen Reaktion umgesetzt werden.

Bevorzugt ist die schrittweise Durchführung: a) Methylolierung und Benzyletherbildung und b) Veretherung mit einem Alkohol. Als Veretherungsalkohole werden bevorzugt die im folgenden genannten «Kupplungslösungsmittel» sowie Dialkohole, wie Glykol, Butandiol-1,4 und/oder Hexandiol-1,6 eingesetzt.

Zusätzlich ist es möglich, die Methylolierung unter alkalischen Bedingungen in Anwesenheit von $Ca^{++}$- und $Mg^{++}$-Ionen durchzuführen und das o-Methylolphenol nach Zusatz von Säure weiterzubehandeln.

Der Veretherungsgrad der Methylolgruppen der Methylenethergruppen enthaltenden Komponenten (B) kann beliebig variiert werden. Alkylethergruppen aufweisende Produkte werden bevorzugt eingesetzt.

Hohe Veretherungsgrade und niedrige Gehalte an Methylolgruppen sind vorzugsweise bei Produkten zu verwenden, die direkt durch Abmischen mit der Komponente (A) eingesetzt werden sollen.

Bindemittel, die durch eine Vorkondensationsreaktion von Komponente (A) und Komponente (B) hergestellt sind, können einen niedrigeren Veretherungsgrad der Methylolgruppen aufweisen. In diesem Fall lassen sich die im Endprodukt an sich unerwünschten Methylolgruppen in einfacher Weise mit basischen NH-Gruppen z.B. der Komponente (A) oder mono- und di-funktionellen Aminen bei z.B. 50–90°C umsetzen.

Die Mengenverhältnisse der Komponente (A) und (B) können stark schwanken. Im allgemeinen werden 55–95 Gew.-% der Komponente (A) mit 5–45 Gew.-% der Komponente (B), bevorzugt 60–80 Gew.-% der Komponente (A) mit 20–40 Gew.-% der Komponente (B) kombiniert.

Im allgemeinen werden alle salzartigen Katalysatoren vor Verwendung der Komponente (B) in den erfindungsgemässen Bindemittel entfernt. Das geschieht meistens, indem man sie in einer wasser- oder alkoholunlöslichen Form durch Filtration z.B. als Phosphat oder Sulfat beseitigt. Alternativ können die Salze auch ausgewaschen werden. In manchen Fällen kann die Anwesenheit von z.B. wasserlöslichen Pb-Salzen in den erfindungsgemässen Überzugsmittel erwünscht sein.

Zur Entfernung nicht umgesetzter Restphenole kann die veretherte Komponente (B) bei 80–130, vorzugsweise bei 90–120°C bei vermindertem Druck über einen Dünnschichtverdampfer gereinigt werden. In Abhängigkeit von Temperatur und Verweilzeit stellt sich bei diesem Verfahrensschritt das endgültige Molekulargewicht der Komponente (B) ein. Der Festgehalt der so erhaltenen Produkte liegt bei 85–95%; der Gehalt an Phenol <1%. Vgl. auch deutsche Patentanmeldung P 3 422 510.2, O.Z. 0 050/37 175.

Das Kondensationsprodukt (B) kann neben Phenol auch aus bevorzugt m-substituierten Phenolen und Mischungen von Phenol und substituierten Phenolen hergestellt werden. Aus der Reihe der m-substituierten Phenole eignet sich besonders Cardanol in Kombination mit Phenol, wobei 10–30% Cardanol eingesetzt werden können. Cardanol wird aus Cashewnussschalenöl durch Vakuumdestillation gewonnen und besteht im wesentlichen aus 3-(8,11-Pentadecadienylphenol). Im einzelnen sind noch folgende Phenole als Ausgangsstoffe zu nennen: 2,3-Xylenol, 3,5-Xylenol, mono- und disubstituierte Isopropyl-, Butyl-, Amyl-, Octyl- und Dodecyl-Phenole, olefinisch ungesättigte Alkylphenole wie Allylphenol, Butenylphenol und Hexenylphenol, sowie Bisphenol A. p-substituierte Phenole werden dabei nur in untergeordneten Mengen eingesetzt.

Die Verteilung und Orientierung der funktionellen Gruppen der Komponente (B) ist vorzugsweise im einzelnen wie folgt:

Die Phenol-Phenol-Bindungen bestehen zu 15–90% aus Methylenetherbrücken und 10–85% Methylenbrücken, mit einer Orientierung von 70–90% in o-Position und 10–30% in p-Position.

Der Veretherungsgrad kann beispielsweise 0,05–0,75 Ethergruppen, bezogen auf eine phenolische OH-Gruppe, in der Form eines Alkoxymethylethers oder Aralkoxymethylethers betragen.

Die mit Carbonsäuren wasserlöslich bzw. wasserdispergierbar gemachten wässrigen Überzugsmittel können ferner Pigmente, Kupplungs-Lösungsmittel, Antioxidantien und oberflächenaktive Mittel enthalten. Die Pigmente gehören dem herkömmlichen Typ an; geeignet sind ein oder mehrere Pigmente, wie Eisenoxid, Bleioxide, Strontiumsulfat, Russ, Titandioxid, Talkum, Bariumsulfat, Bariumgelb ($BaCrO_4$), Cadmiumrot (CdS bzw. CdSe), Chromgrün oder Bleisilikat. Der verwendete Pigmentanteil kann bis zu einem Pigment/Bindemittel-Gewichtsverhältnis von 1:1, bis etwa 1:10, variieren. Ausserdem können in den Bädern Schwermetallionen enthalten sein, wie $Pb^{++}$; $Cu^{++}$; $Sn^{++}$;, $Zn^{++}$; $Co^{++}$; $Zr^{++}$ in Form ihrer Acetate, Naphthenate oder Oleate usw.

Die oben bereits erwähnten «Kupplungslösungsmittel» sind wasserlösliche oder teilweise wasserlösliche organische Lösungsmittel für die erfindungsgemäss verwendeten Harzkomponenten. Spezielle Beispiele für solche Lösungsmittel sind Ethylenglykolmonomethylether, Ethylenglykolmonoethylether, Ethylenglykolmonobutylether, Ethylenglykolmonohexylether, Diethylenglykolmonobutylether, Ethanol, Isopropanol und Isobutanol. Die Kupplungs-Lösungsmittel werden im allgemeinen in Anteilen von 0 bis 8 Gew.-% (bezogen auf das Gesamtgewicht des Überzugsbades) eingesetzt. Der Gesamtfeststoffgehalt des kationischen Elektrotauchbades wird im Bereich von etwa 5 bis etwa 25 Gew.-%, vorzugsweise von etwa 12 bis etwa 22 Gew.-% (jeweils bezogen auf das Gesamtbadgewicht) gehalten.

Wird beabsichtigt, die Härtung der erfindungsgemässen Überzugsmittel zu beschleunigen, so

kann das auf einfache Weise durch den Einbau von Sulfonatgruppierungen in das NH-Gruppen aufweisende Epoxid/Amin-Addukt in einer Menge von 0,05 bis 3,0, vorzugsweise 0,1 bis 2,0, insbesondere 0,2 bis 1,0 Gew.-%, bezogen auf Gesamtbindemittel (fest) bewerkstelligt werden.

Dazu wird das Epoxid/Amin-Addukt der Komponente (A) mit Amidosulfonsäure umgesetzt. Diese Reaktion erfolgt ab 140 °C–180 °C und findet unter Ammoniakabspaltung statt.

Um sicherzustellen, dass die beabsichtigten Mengen der katalytisch wirkenden Sulfonatgruppen in das Bindemittel eingebaut werden, ist auf vollständigen Umsatz, d. h. auf vollständige $NH_4$-Abspaltung zu achten.

Bevorzugt werden die erfindungsgemässen Lackbindemittel mit anorganischen oder organischen Säuren z. B. Phosphorsäure, vorzugsweise mit wasserlöslichen Carbonsäuren wie Essigsäure, Ameisensäure oder Milchsäure protoniert angewandt und auf die üblichen metallischen Substrate wie Eisen, Stahl, Aluminium, Kupfer, die gegebenenfalls vorbehandelt z. B. phosphatiert sind, appliziert.

Die aus den protonierten erfindungsgemässen Überzugsmittel erhaltenen kathodisch abscheidbaren Lackzubereitungen, die auch konventionell durch Spritzen, Tauchen oder Fluten usw. verarbeitet werden könne, weisen einen pH-Wert von 6,5–8,7, vorzugsweise 7,0–8,2 bei einem Leitwert von 700–2500, vorzugsweise 1000–2000 µS auf.

Zur Abscheidung der Überzugsmittel wird ein Gleichstrom von 200–500 V etwa 1–3 Minuten angelegt. Nach dem Abspülen von noch anhaftenden Badmaterialien wird der auf dem elektrisch leitenden Körper kathodisch abgeschiedene Film bei etwa 130 bis 175, vorzugsweise 140 bis 170 °C 10–30 Minuten gehärtet.

Die erfindungsgemässen Überzugsmittel ergeben nach der kathodischen Abscheidung glatte und hochwertige Beschichtungen, die die für den Einsatz als Grundierung notwendigen guten Eigenschaften besitzen. Sie weisen hervorragende mechanische Eigenschaften sowie sehr gute Korrosionsbeständigkeit, z. B. im Salzsprühtest auf.

Die in den Beispielen angegebenen Teile und Prozente sind Gewichtsteile bzw. Gewichtsprozente.

Herstellung der Komponente (A):

1614,6 Teile eines Diglycidylethers aus Epichlorhydrin und Bisphenol A mit einem Epoxidwert von 0,5 und 403,0 Teile eines ebensolchen Harzes mit einem Epoxidwert von 0,2 werden in 864,5 Teilen Toluol bei 70 °C gelöst.

2678,0 Teile dieser Lösung werden in 2,5 Stunden 869,2 Teilen Hexamethylendiamin bei 70 °C zudosiert.

Das überschüssige Amin wird bei 150 °C im Vakuum teilweise entfernt und das Konzentrat in einem Dünnschichtverdampfer bei 190 °C und einem Druck von 0,3 Torr weiter behandelt.

Das Produkt weist einen Erweichungspunkt von 70 °C und einen Gesamtstickstoffgehalt von 4,7% auf, wovon 1,9% auf primäre, 2,6% auf sekundäre und 0,2% auf tertiäre Aminogruppen entfallen.

400,0 Teile dieses Adduktes werden mit 55,0 Teilen Dimerfettsäure (z. B. ®Pripol 1014), 35,0 Teilen Stearinsäure, 7 Teilen Triphenylphosphin, 80,0 Teilen Isodecanol und 25 Teilen Toluol versetzt und auf 100 °C erhitzt; anschliessend werden 2,15 Teile Amidosulfonsäure in 5 Teilen $H_2O$ warm gelöst zugesetzt und in 1,5 Stunden auf 160 °C erhitzt, wobei Toluol, das zugesetzte Wasser und Teile des Reaktionswassers, sowie ab 140 °C Ammoniak entfernt werden. Der Ansatz wird bei 170 °C gehalten bis eine Viskosität von 1050 mPa.s bei 150 °C (gemessen mit dem Epprecht-Viskosimeter) erreicht ist. Die Säurezahl beträgt 6,0. Der Ansatz wird verdünnt mit einer Mischung aus je 75,0 Teilen Butylglykol, Ethylglykol sowie 91,0 Teilen Ethanol.

Der Feststoffgehalt der so erhaltenen Lösung der Komponente (A) beträgt 60,5%, die Aminzahl 74 mg KOH/g, die t-Aminzahl 4,8 mg KOH/g.

Herstellung der Komponente (B):

716,5 Teile Phenol, 1312,5 Teile Formalin, 40%ig (= 40%ige wässrige Formaldehydlösung) und 33,3 Teile Zinkacetat [$Zn(CH_3Coo)_2X2H_2O$] werden in einem Reaktor ohne Metallteile auf 70 °C erhitzt und bei dieser Temperatur gehalten bis die exotherme Reaktion abgeklungen ist. Dann wird auf 90 °C aufgeheizt und 4 Stunden diese Temperatur gehalten.

Zu dieser Reaktionslösung werden 1250 Teile n-Butanol, nach 2,5 Stunden nochmals 46,0 Teile Paraformaldehyd zugesetzt und solange bei 80 bis 83 °C Wasser ausgekreist bis kein Wasser mehr übergeht. Bei 50 bis 60 °C werden dann 10 Teile $H_3PO_4$, in n-Butanol gelöst, langsam zudosiert, das gebildete Zinkphosphat durch Filtration entfernt, die Lösung im Vakuum bei 60–80 °C eingeengt und anschliessend im Dünnschichtverdampfer bei 120 °C und einem Druck von 1–2 mbar weiter aufkonzentriert. Der Festgehalt beträgt ca. 90%. Zur Einstellung einer Viskosität von 1600 mPa.s bei 75 °C (gemessen mit dem Epprecht-Viskosimeter) wird das Produkt am Rotationsverdampfer bei 100–110 °C ca. 4 Stunden weiterbehandelt. Der Festgehalt der so erhaltenen Komponente (B) beträgt schliesslich 93%.

Herstellung und Verwendung der erfindungsgemässen Überzugsmittel:

307,0 Teile der oben beschriebenen Lösung der Komponente (A) und 83,0 der oben beschriebenen Komponente (B) werden gemischt, mit 50,0 Teilen Isobutanol verdünnt und bei 80 °C gerührt bis eine Viskosität von 840 mPa.s bei 75 °C (gemessen mit den Epprecht-Viskosimeter) erreicht worden ist.

Die Aminzahl beträgt 52 mg KOH/g; der Festgehalt: 60,6%.

Zur Elektrotauchlackierung werden 200,0 Teile des Festharzes mit 5,0 Teilen Essigsäure protoniert und mit vollentsalztem Wasser auf 2000 Teile Badvolumen verdünnt. Der Bad-pH-Wert beträgt 7,0, der Leitwert 1530 µS.

Die Abscheidung nach 2 Tagen Alterung bei 30°C bei 300 V/2 Minuten auf als Kathode geschaltete mit Zinkphosphat beschichtete Stahlbleche, ergibt nach dem Einbrennen (20 Minuten bei 140°C) ca. 17 µm dicke, schlagfeste Beschichtungen mit guten Korrosionsschutzwerten.

**Patentansprüche**

1. Hitzehärtbares wässriges Überzugsmittel, dadurch gekennzeichnet, dass es als Bindemittel ein Gemisch oder Vorkondensat aus

(A) 55 bis 95 Gew.-% eines stickstoffbasischen Harzes mit einem mittleren Molekulargewicht $\bar{M}_n$ zwischen 500 und 10000 und einer NH-Aminzahl von 20 bis 150 mg KOH/g, erhältlich durch Umsetzung eines Polyepoxides mit einer 1,2-Epoxidäquivalenz von etwa 2 oder mehr mit einem Amin, das mindestens eine primäre oder sekundäre Aminogruppe enthält und

(B) 5 bis 45 Gew.-% eines Phenolharzes mit einem mittleren Molekulargewicht $\bar{M}_n$ von 250 bis 2500 und auf der Basis eines über o,o'-Methylenether-Gruppen verknüpften Resolethers, dessen p-Positionen überwiegend Wasserstoff und/oder Methylolalkylethergruppen tragen, enthält.

2. Überzugsmittel nach Anspruch 1, dadurch gekennzeichnet, dass die Phenol-Phenol-Bindungen der Komponente (B) zu 15–90% aus Methylenetherbrücken und zu 10–85% aus Methylenbrükken bestehen, mit einer Orientierung von 70–90% in o-Position und 10–30% in p-Position.

3. Überzugsmittel nach Anspruch 1, dadurch gekennzeichnet, dass die Komponente (B) in p-Position zusätzliche Methylolalkylethergruppen besitzt.

4. Überzugsmittel nach Anspruch 1 oder 3, dadurch gekennzeichnet, dass die Komponente (B) aus Phenol und Formaldehyd und gegebenenfalls einem aliphatischen Alkohol bei pH 4,0–7,0 in Anwesenheit von zweiwertigen Metallionen hergestellt worden ist.

5. Verwendung eines Überzugsmittels gemäss einem der vorhergehenden Ansprüche nach Protonierung mit Säure als Bindemittel für die kathodische Elektrotauchlackierung von Metallteilen.

**Claims**

1. A heat-curable aqueous coating agent which contains, as a binder, a mixture or precondensate of

(A) from 55 to 95% by weight of a resin possessing basic nitrogen groups and having a mean molecular weight $\bar{M}n$ of from 500 to 10,000 and an NH amine number of from 20 to 150 mg of KOH/g, obtainable by reacting a polyepoxide having a 1,2-epoxide equivalence of about 2 or more with an amine which contains one or more primary or secondary amino groups and

(B) from 5 to 45% by weight of a phenol resin having a mean molecular weight $\bar{M}n$ of from 250 to 2,500 based on a resol ether which is bonded via o,o'-methylene ether groups and whose p-positions predominantly carry hydrogen and/or methylolalkyl ether groups.

2. A coating agent as claimed in claim 1, wherein the phenol-phenol bonds of component (B) consist of 15-90% of methylene ether bridges and 10-85% of methylene bridges, 70-90% being in the o-position and 10-30% in the p-position.

3. A coating agent as claimed in claim 1, wherein component (B) possesses additional methylolalkyl ether groups in the p-position.

4. A coating agent as claimed in claim 1 or 3, wherein component (B) is prepared from phenol and formaldehyde and, if appropriate, an aliphatic alcohol, at pH 4.0-7.0, in the presence of divalent metal ions.

5. Use of a coating agent as claimed in any of the preceding claims as a binder for the cathodic electrocoating of metal articles, after protonation with an acid.

**Revendications**

1. Agent de revêtement aqueux thermo-durcissable, caractérisé en ce qu'il contient en tant que liant un mélange ou pré-condensat de

(A) 55 à 95% en poids d'une résine azotée avec un poids moléculaire moyen $\bar{M}_n$ entre 500 et 10000 et avec un indice d'amine -NH de 20 à 150 mg KOH/g, que l'on peut obtenir par conversion d'un polyépoxyde ayant un équivalent en 1,2-époxyde d'environ 2 ou plus avec une amine, qui contient au moins un groupe amino primaire ou secondaire et

(B) 5 à 45% en poids d'une résine phénolique ayant un poids moléculaire moyen $\bar{M}_n$ de 250 à 2500 et à base d'un éther résol lié par des groupes éther méthylénique-o,o', dont les positions para, portent de façon prépondérante de l'hydrogène et/ou des groupes méthylolalkyl-éther.

2. Agent de revêtement suivant la revendication 1, caractérisé en ce que les liaisons phénol-phénol du composant (B) se composent de 15-90% de ponts éther méthylénique et de 10-85% de ponts méthylène, avec une orientation de 70-90% en position ortho et 10-30% en position para.

3. Agent de revêtement suivant la revendication 1, caractérisé en ce que le composant (B) possède en position para des groupes méthylolalkyl-éther supplémentaires.

4. Agent de revêtement suivant la revendication 1 ou 3, caractérisé en ce que le composant (B) est préparé à partir de phénol et de formaldéhyde et éventuellement d'un alcool aliphatique, à un pH de 4,0-7,0, en présence d'ions métalliques bivalents.

5. Utilisation d'un agent de revêtement selon l'une des revendications précédentes après protonation avec un acide comme liant pour le trempage électro-phorétique cathodique de pièces métalliques.